# EUROPÄISCHE PATENTSCHRIFT

(11) **EP 2 178 638 B1**
(45) Veröffentlichungstag und Bekanntmachung des Hinweises auf die Patenterteilung: **27.02.2013**
(21) Anmeldenummer: 08784724.0
(22) Anmeldetag: 11.07.2008
(51) Int. Cl.: B01J 23/86, B01D 53/86, B01J 37/02, B01J 35/10

(54) **KATALYSATOR, VERFAHREN ZU DESSEN HERSTELLUNG UND DESSEN VERWENDUNG FÜR DIE ZERSETZUNG VON N2O**
CATALYST, PRODUCTION METHOD THEREFOR AND USE THEREOF FOR DECOMPOSING N2O
CATALYSEUR, SON PROCÉDÉ DE FABRICATION ET SON UTILISATION POUR LA DÉCOMPOSITION DE N2O

(30) Priorität: 14.08.2007 DE 102007038711
(43) Veröffentlichungstag der Anmeldung: 28.04.2010
(73) Patentinhaber: ThyssenKrupp Uhde GmbH, 44141 Dortmund (DE)
(72) Erfinder: SCHWEFER, Meinhard, 59872 Meschede (DE); SIEFERT, Rolf, 33378 Rheda-Wiedenbrück (DE); SEIFERT, Frank, 49479 Ibbenbüren (DE); FROEHLICH, Frank, 07745 Jena (DE); BURCKHARDT, Wolfgang, 07629 Hermsdorf (DE)
(74) Vertreter: Ackermann, Joachim
(86) Internationale Anmeldenummer: PCT/EP2008/005685
(87) Internationale Veröffentlichungsnummer: WO 2009/021586

(56) Entgegenhaltungen:
- EP-A- 1 147 813
- WO-A-02/02230
- FR-A- 2 860 734
- BOISSEL ET AL: "Catalytic decomposition of N2O over monolithic supported noble metal-transition metal oxides" APPLIED CATALYSIS B: ENVIRONMENTAL, ELSEVIER, Bd. 64, Nr. 3-4, 2. Mai 2006 (2006-05-02), Seiten 234-242, XP005401807 ISSN: 0926-3373
- MENG ET AL: "A study on the catalytic synergy effect between noble metals and cobalt phases in Ce-Al-O supported catalysts" APPLIED CATALYSIS A: GENERAL, ELSEVIER SCIENCE, AMSTERDAM, NL, Bd. 301, Nr. 2, 24. Februar 2006 (2006-02-24), Seiten 145-151, XP005282036 ISSN: 0926-860X
- DATABASE WPI Week 197423 Thomson Scientific, London, GB; AN 1974-42332V XP002505873 & JP 48 089185 A (HITACHI MAXEL LTD) 21. November 1973 (1973-11-21) in der Anmeldung erwähnt

## Beschreibung

Die vorliegende Erfindung betrifft geträgerte Katalysatoren für die Zersetzung von Lachgas. Diese können insbesondere in industriellen Verfahren bei denen Lachgas anfällt, wie der Herstellung von Caprolactam, Adipinsäure oder von Salpetersäure, eingesetzt werden.

Bei der industriellen Ammoniakoxidation, beispielsweise im Verlauf der Produktion von Salpetersäure, entsteht neben dem gewünschten Stickstoffmonoxid NO auch das unerwünschte Lachgas N₂O. Dieses trägt in nicht unerheblichem Maße zum Abbau von stratosphärischem Ozon und zum Treibhauseffekt bei. Weitere Quellen von Lachgas sind großtechnische Oxidationen mit Salpetersäure als Oxidationsmittel, wie beispielsweise bei der Herstellung von Adipinsäure durchgeführt.

Obwohl der relative Volumenanteil von N₂O an den klimarelevanten Spurengasen in der Erdatmosphäre unter 0,1 Vol% (CO₂ 98,7 Vol-%, CH₄ 1,2 Vol.-%) liegt, sein Treibhauspotential bezogen auf CO₂ aber den Faktor 310 erreicht, beträgt der relative Anteil des Lachgases am zusätzlichen, durch den Menschen verursachten Treibhauseffekt etwa 30 % des CO₂- Beitrages.

Technische Lösungen, die Lachgasemissionen insbesondere bei der Salpetersäureproduktion zu reduzieren, da dieses Verfahren die größte Quelle industrieller Lachgasemissionen darstellt, sind nicht mehr nur aus Gründen des Umweltschutzes gefragt, sondern werden inzwischen auch vom Gesetzgebeber eingefordert.

Ein Beispiel für eine in großem Maßstab industriell durchgeführte Gasphasenreaktion mit N₂O-Problematik ist die Herstellung von Salpetersäure. Diese erfolgt im industriellen Maßstab im allgemeinen nach dem Ostwald-Verfahren durch katalytische Oxidation von Ammoniak an Pt/Rh-Katalysatoren. Dabei wird NH₃ sehr selektiv zu NO oxidiert, welches dann im Laufe des weiteren Prozesses zu NO₂ oxidiert wird und schließlich mit Wasser in einem Absorptionsturm zu Salpetersäure umgesetzt wird. Die Pt/Rh-Katalysatoren sind als dünne Netze ausgebildet und in einem Brenner auf breiter Fläche aufgespannt. Die Netze werden von einem Gasgemisch aus typischerweise etwa 8 -12 Vol% Ammoniak und Luft durchströmt, wobei sich an den Netzen durch die Exothermie der Reaktion eine Temperatur von etwa 850-950°C einstellt.

Eine Übersicht über den Ablauf der Salpetersäureproduktion und deren verschiedene Verfahrensvarianten ist in Ullmanns Encyclopedia of Industrial Chemistry, Vol.A 17, VCH Weinheim (1991) gegeben.

Für eine Minderung der N₂O-Emissionen in den Abgasen von industriellen Anlagen, wie Anlagen zur Salpetersäureherstellung, existieren prinzipiell drei verschiedene verfahrens- bzw. anlagentechnische Möglichkeiten:

### 1. Primärmaßnahme

Selektive Oxidation des Ammoniaks zu Stickstoffmonoxid und Vermeidung der unerwünschten Bildung von Lachgas durch Modifikation der chemischen Zusammensetzung des Oxidationskatalysators.

### 2. Sekundärmaßnahme

Minderung des N₂O-Gehaltes des Prozessgases durch Zwischenschaltung eines Katalysators, der selektiv Lachgas in seine Bestandteile N₂ und O₂ zersetzt, zwischen den üblicherweise bei der Ammoniakoxidation eingesetzten Edelmetallnetzen, an denen die Oxidation stattfindet, und dem Absorptionsturm, und zwar vor der ersten Wärmetauschereinheit nach der Ammoniakoxidation. Die Prozesstemperatur und damit verbunden die erforderliche Arbeitstemperatur des Katalysators liegt hier vergleichsweise hoch, beispielsweise zwischen 800 und 1000 °C.

### 3. Tertiärmaßnahme

Katalytischer Abbau des N₂O, das in den die Absorptionstürme verlassenden Abgasen enthalten ist. Hierbei handelt es sich um eine dem eigentlichen Produktionsprozess nachgeschaltete Abgasreinigung. Die Abgas- und damit auch Arbeitstemperatur des Katalysators liegt hier vergleichsweise niedrig und variiert je nach Anlagentyp beispielsweise zwischen 200 und 700 °C. Bei dieser Abgasreinigung ist der Katalysator zwischen Absorptionsturm und Kamin angeordnet, vorzugsweise zwischen Absorptionsturm und Restgasturbine und insbesondere kurz vor der Restgasturbine.

Während Variante 1 durch Variation der Oxidationskatalysatoren und/oder durch eine Änderung der Druck- und Temperaturführung des Prozesses erreicht werden kann, erfordern die Varianten 2 und 3 den Einsatz spezieller Katalysatoren zur selektiven Zersetzung von N₂O, die allen durch den Prozess vorgegebenen Anforderungen gerecht werden müssen.

Bei großtechnischen Oxidationsverfahren mit Salpetersäure als Oxidationsmittel, beispielsweise bei der Herstellung von Adipinsäure, entstehen im Verfahren große Anteile an Lachgas, welche bis zu 50 Vol. % des entsprechenden Abgases ausmachen können. Die Temperaturen des Abgases können sich durch die exotherme Zersetzung von Lachgas auf bis zu etwa 900 °C erhöhen. Ein geeigneter N₂O-Zersetzungs-katalysator muss daher in diesem Temperaturbereich aktiv sein und muss sich für den längerfristigen Einsatz in diesem Temperaturbereich eignen.

Katalysatoren, welche die Zersetzung von N₂O in die unschädlichen Komponenten N₂ und O₂ ermöglichen, wurden in den vergangenen Jahren intensiv erforscht. Die Bandbreite in Frage kommender Katalysatormaterialien reicht dabei von edelmetallhaltigen Katalysatoren, die bevorzugt auf anorganisch-nichtmetallischen Trägermaterialien aufgebracht worden sind, kationenausgetauschten oder metalloxidhaltigen mikroporösen Gerüstsilikaten (Zeolithen) bis hin zu Übergangsmetalloxiden und Mischoxiden mit Perowskit- bzw. Perowskit-ähnlicher Struktur oder mit Spinellstruktur.

In der Fach- und Patentliteratur wurde die prinzipielle Eignung vieler der genannten Katalysatormaterialien nachgewiesen, wobei ein erhöhter Druck, sehr hohe Arbeitstemperaturen und korrosive Bedingungen besonders hohe Ansprüche an die Katalysatoren nicht nur hinsichtlich ihrer katalytischen Aktivität und Selektivität, sondern vor allem auch an ihre thermische und chemische Beständigkeit über längere Zeiträume, stellen.

Katalysatoren für den Einsatz nach der Sekundärmaßnahme (im folgenden "Sekundärkatalysator" genannt) in Salpetersäureanlagen müssen zuallererst eine hohe Temperaturstabilität aufweisen, um dauerhaft bei den erforderlichen hohen Temperaturen von typischerweise zwischen 800 und 1000 °C arbeiten zu können. Diese thermische Stabilität weisen weder einfache Edelmetallkatalysatoren auf, die bei diesen Temperaturen deaktiviert werden bzw. abdampfen, noch Zeolith- oder HydrotalcitStrukturen auf, deren Gerüststruktur bei diesen Temperaturen zerstört werden. Als mögliche Alternative bieten sich deshalb hochtemperaturbeständige keramische Katalysatoren an.

Oftmals enthalten Sekundärkatalysatoren ein hochtemperaturfestes keramisches Trägermaterial, das selbst katalytische Eigenschaften haben kann, aber nicht zwingend haben muss, sowie eine oder mehrere Aktivkomponenten. Die katalytisch aktive Komponente kann dabei homogen in der keramischen Matrix verteilt oder als oberflächlich aufgetragene Schicht vorliegen. Daraus ergibt sich als eine weitere Anforderung an einen Sekundärkatalysator, dass auch bei den hohen Einsatztemperaturen keine chemische Reaktion zwischen keramischem Träger und Aktivkomponente stattfindet, was unweigerlich zu einer Deaktivierung führen würde.

Aus der Literatur ist bekannt, dass vor allem Übergangsmetalloxide und insbesondere das Kobaltoxid Co₃O₄ sehr gute Katalysatoren, d.h. Aktivkomponenten, für die Zersetzung von N₂O sind. Auch übergangsmetallhaltige Mischoxide mit Perowskitstruktur, mit Perowskit-ähnlicher Struktur oder mit Spinellstruktur wurden mehrfach beschrieben und detailliert untersucht (N. Gunasekaran et al., Catal. Lett. (1995), 34 (3,4), pp. 373-382).

Dem Nachteil des vergleichsweise hohen Preises dieser Katalysatoren wird nach dem Stand der Technik dadurch begegnet, dass die hochpreisigen Aktivkomponenten entweder in einer preiswerten keramischen Matrix dispergiert werden oder aber auf ein solches keramisches Trägermaterial oberflächlich aufgetragen werden. In den überwiegenden Fällen beschränkten sich die Untersuchungen dieser Katalysatoren allerdings auf Arbeitstemperaturen im Bereich von 300 bis 600 °C. Bei erhöhten Temperaturen, wie z.B. beim Einsatz als Sekundärkatalysator in Anlagen zur Herstellung von Salpetersäure ergeben sich neue Probleme, vor allem mangelnde Sinterstabilität und die Neigung zu chemischen Reaktionen zwischen Trägermaterial und Aktivkomponente, in dessen Folge der Katalysator seine Aktivität verlieren kann (Deaktivierung).

Im speziellen Fall des Sekundärkatalysators (Zersetzung von N₂O in Gegenwart von NOₓ, dem Zielprodukt des Prozesses) ergibt sich als weitere wesentliche Anforderung an den Katalysator die Selektivität der N₂O-Zersetzung gegenüber der Zersetzung von NOₓ.

Eine weitere Anforderung an die Schüttung von Sekundärkatalysatoren ist ein vergleichsweise geringes Gewicht der Schüttung, da in der Anlage nur ein begrenzter Raum zur Verfügung steht und da die Anlagenteile durch das Katalysatorgewicht nur begrenzt belastet werden dürfen. Geringe Katalysatorgewichte lassen sich prinzipiell durch den Einsatz von Katalysatoren hoher Aktivität und/oder geringer Schüttdichte erzielen.

Die Aufgabe bei der Entwicklung eines Sekundärkatalysators ist also die Suche nach einem Werkstoffsystem und nach einem Herstellungsverfahren, mit dem die genannten Herausforderungen erfüllt werden können. Die Verwendung von Co₃O₄ und/oder Co-haltigen Mischoxiden (z.B. Perowskiten der allgemeinen Zusammensetzung La₁₋ₓAₓCo_{1-y}B_{y}O₃ mit A = Sr, Ca, Ba, Cu, Ag; B = Fe, Mn, Cr, Cu; x = 0 bis 1 und y = 0 bis 0,95), welche in Beziehung auf ihre katalytische Aktivität zur Zersetzung von N₂O eine herausragende Stellung einnehmen, ist dabei besonders problematisch, da die bei Temperaturen ab etwa 900 °C einsetzende irreversible chemische Reaktion von Co₃O₄ mit vielen Trägermaterialien, wie z.B. mit Al₂O₃, zu einem Verlust an katalytischer Aktivität führt.

In WO-A-00/13,789 wird ein Sekundärkatalysator mit Erdalkaliverbindungen (bevorzugt MgO) als Trägermaterial beschrieben. Dieser weist den Vorteil auf, dass MgO selbst eine gewisse katalytische Aktivität zur Zersetzung von N₂O besitzt und damit der Anteil an hochpreisiger Aktivkomponente reduziert werden kann. Als Nachteil wird eine nicht 100 %-ige Selektivität festgestellt, es wird zum Teil auch NOₓ zersetzt. Des weiteren zeigen langfristige Versuche an diesem Werkstoffsystem unter Realbedingungen, dass auch hier Co-Ionen von der aktiven Phase Co₃O₄ in das MgO-Gitter wandern und eine Mg₁₋ₓCoₓO Festkörperverbindung entsteht, was mit einer Deaktivierung des Katalysators einhergeht.

Ein ähnliches Werkstoffsystem mit Kobaltoxid als Aktivkomponente und Magnesiumoxid als Supportmaterial wird in US-A-5,705,136 beschrieben. Auch hier wird aber die Problematik der mangelnden Sinterstabilität im Hochtemperaturbereich erkannt, weshalb die in diesem Dokument beschriebenen Katalysatoren für den Einsatz bei Temperaturen zwischen 400 und 800 °C geeignet sind, nicht aber für den Hochtemperatureinsatz in Salpetersäureanlagen.

Irreversible Festkörperreaktionen sind auch zwischen Übergangsmetalloxiden und ZrO₂ bekannt, weshalb auch Zirkonoxid (in JP-A-48/089,185 als Trägermaterial genannt) im Hochtemperaturbereich ausscheidet.

WO-A-02/02,230 beansprucht einen Katalysator bestehend aus Co₃₋ₓMₓO₄ (M = Fe, Al und x = 0 bis 2) als Aktivkomponente auf einem CeO₂-Support. Tatsächlich findet hier bei einer Einsatztemperatur von 900 °C keine Reaktion zwischen Aktivkomponente und Trägermaterial statt und auch die Selektivität der katalytischen Reaktion wird durch CeO₂ verbessert. Allerdings sind für den praktischen Einsatz eines Katalysators mit Massivsupport aus CeO₂ Preis, Verfügbarkeit und das enorme Gewicht problematisch.

Für die Beseitigung von N₂O aus dem Tailgas der Salpetersäureanlagen steht aufgrund der niedrigeren Abgas- und damit Arbeitstemperaturen eine größere Palette an möglichen Katalysatorwerkstoffen zur Verfügung. Des weiteren ist die Forderung nach der Selektivität gegenüber anderen Stickstoffoxiden nicht mehr gegeben. Dafür ergibt sich aber als neue Problematik der deaktivierende Einfluss von NOₓ auf die N₂O-Zersetzung.

F. Kapteijn et al. beschreiben in Greenhouse Gas Control Technologies, Elsevier Science Ltd. 1999, pp. 343-348 Kobalt- und Rhodium-dotierte Hydrotalcitstrukturen als aktive N₂O-Katalysatoren bei niedrigen Arbeitstemperaturen. Eine weitere, sehr detaillierte Veröffentlichung der Gruppe um F. Kapteijn ist in Applied Catalysis B: Environmental 23 (1999), pp 59-72 zu finden. Der Nachteil der Hydrotalcite wird z.B. in EP-A-1,262,224 explizit eingeräumt: Gasbestandteile wie z.B. Sauerstoff, Wasser oder NOₓ beeinträchtigen den N₂O-Umsatz des Katalysators. Ein Einsatz in realen Industrieabgasen scheidet damit nahezu aus.

Besondere Aufmerksamkeit galt bisher auch den Zeolithen. In diese mikroporösen Gerüstsilikate können durch Kationenaustausch oder mechanische Mischung aktive Spezies, wie z.B. Fe, Cu oder Co, eingebaut werden, was in der Kombination Aktivkomponente / Porenstruktur sehr aktive Katalysatoren für die Zersetzung von N₂O ergibt. So wird z.B. in US-A-2003/0143142 ein als Tertiärkatalysator eingesetzter Fehaltiger Zeolith beschrieben, der keine Deaktivierung durch NOₓ zeigt, sondern an dem der N₂O-Abbau durch Anwesenheit geringer Mengen NOₓ sogar gefördert wird. Der Nachteil von Zeolithen ist ihre Empfindlichkeit gegen im Abgas enthaltenen Wasserdampf sowie ihre begrenzte thermische Beständigkeit, aus der sich unter Berücksichtigung der für die N₂O-Zersetzung erforderliche Mindesttemperatur ein begrenztes Temperaturfenster ergibt, in welchem diese Zeolithkatalysatoren eingesetzt werden können.

Geträgerte Edelmetallkatalystoren sind ebenfalls als Tertiärkatalysator geeignet, allerdings um ein Vielfaches preisintensiver als edelmetallfreie, keramische Katalysatoren.

In DE-A-100 06 103 wird ein Tertiärkatalysator beschrieben, der durch mechanische Vermischung von MgO und Cobaltoxid (bevorzugt Co₃O₄) oder von Precursoren dieser Oxide mittels Trockenpressen und anschließender Temperung hergestellt wird. Bei Einsatztemperaturen im Bereich von 350 bis 550 °C tritt das Problem der Festkörperreaktion zwischen beiden Oxiden nicht auf. Allerdings erweisen sich diese Katalysatoren als anfällig gegen NOₓ im Abgas. Die dabei eintretende Deaktivierung in Bezug auf die Zersetzung von N₂O ist zwar reversibel, aber unter technischen Einsatzbedingungen nur schwierig durchzuführen.

Aus Applied Catalysis B: Environmental, Elsevier, Bd. 64, Nr. 3-4; S. 234-242 (2006) sind Untersuchungen zur katalytischen Zersetzung von Lachgas in Stickstoff und Sauerstoff bekannt. Der in diesem Dokument beschriebene Katalysator wird durch Imprägnieren eines monolithischen Trägers erzeugt, der mit einem "washcoat" aus gamma-Aluminiumoxid und Ceroxid versehen ist und der anschließend mit einer Übergangsmetall-Aktivkomponente, beispielsweise einem Cobaltsalz imprägniert wurde. Beim Erhitzen dieses Katalysators lagert sich ein Teil der Übergangsmetall-Aktivkomponente in der Aluminiumoxidschicht ein.

In Applied Catalysis A: General, Elsevier, Bd. 301 Nr. 2, S. 145-151 (2006) wird der Einsatz von auf Aluminiumoxid geträgerten Katalysatoren zur Oxidation von CO oder von Kohlenwasserstoffen beschrieben.

FR 2 860 734 A beschreibt den Einsatz von geträgerten Katalysatoren zur Verbrennung von Ruß, insbesondere von Rußen in den Abgasen von Kraftfahrzeugen.

EP-A-1,147,813 beschreibt einen keramischen Katalysatorformkörper zur selektiven Zersetzung von N₂O. Dabei kommen Träger mit einem hohen Anteil an MgO zum Einsatz.

Aufgabe der vorliegenden Erfindung ist die Bereitstellung von Katalysatoren, welche den überwiegenden Teil der oben angeführten Nachteile und Probleme überwinden. Die erfindungsgemäßen Katalysatoren sollten darüber hinaus durch ein überaus.flexibles Herstellungsverfahren erzeugt werden können, was sie in industriellen Anlagen mit N₂O Problematik universell einsetzbar macht (sowohl im Hochtemperaturbereich als auch im Niederternperaturbereich). Die Verwendung eines preiswerten Trägermaterials sollte die Katalysatoren auch aus ökonomischen Gesichtspunkten attraktiv gestalten.

Die vorliegende Erfindung betrifft Katalysatoren für die Zersetzung von N₂O in Stickstoff und Sauerstoff in der Gasphase mit einem porösen Träger aus polykristallinem oder glasartigem anorganischem Material bestehend aus Magnesiumoxid oder aus keramischen Mischoxid bestehend zu mindestens 50 Masse-% aus Magnesiumoxid, einer darauf aufgebrachten Ceroxid-Funktionsschicht, die aus Ceroxid besteht oder aus Mischoxiden, bei denen bis zu 50 Mol % der Cerionen durch andere Metallionen ersetzt sind, und einer darauf aufgebrachten Schicht aus oxidischem Kobalt enthaltenden Material.

Die erfindungsgemäßen Katalysatoren enthalten somit einen Träger sowie mehrere darauf aufgebrachte speziellen Funktionsschichten.

Dabei handelt es sich hauptsächlich um Träger aufgebaut aus anorganischen Oxiden, aus anorganischen Mischoxiden oder aus Mischungen von anorganischen Oxiden.

Diese Träger können durch Sinterverfahren hergestellt sein und sind somit porös und polykristallin (nachstehend auch "keramisch" oder "Keramik" genannt).

Bevorzugt werden keramische Träger.

Das eingesetzte Trägermaterial ist Magnesiumoxid MgO. Dabei handelt es sich um reines Magnesiumoxid oder um Mischoxide, die zu mindestens 50 Masse %, vorzugsweise zu mindestens 80 Masse-%, aus Magnesiumoxid bestehen. Als natürliche Verunreinigung oder als gezielte Beimengung zur Verbesserung der mechanischen Eigenschaften kann das bevorzugt eingesetzte keramische Mischoxid neben MgO bis zu 50 Masse-%, bevorzugt bis zu 20 Masse-%, an anderen anorganischen Oxiden enthalten, insbesondere SiO₂, Al₂O₃, CaO und/oder Fe₂O₃.

Magnesiumoxid ist als preiswertes, leicht verfügbares Trägermaterial besonders bevorzugt; dieses besitzt zumindest im Hochtemperaturbereich auch eine gewisse eigene katalytische Aktivität für die Zersetzung von Lachgas. Aus Kostengründen und aus Gründen des Katalysatorgewichts sollte Ceroxid im Träger nicht oder nur in geringen Mengen, beispielsweise bis zu 10 Gew. %, bezogen auf das Gewicht des Trägers, vorhanden sein.

Das Trägermaterial bzw. der daraus hergestellte Katalysator liegt als Formkörper beliebiger Größe und Geometrie vor, bevorzugt in Geometrien, die ein großes Verhältnis von Oberfläche zu Volumen aufweisen und bei deren Durchströmung ein möglichst geringer Druckverlust erzeugt wird.

Bevorzugt werden Formkörper der Trägermaterialien und der Katalysatoren, bei denen das Verhältnis von Oberfläche zu Volumen 0,5 bis 10 mm⁻¹, insbesondere 1 bis 5 mm⁻¹, beträgt.

Typisch sind alle in der Katalyse bekannten Geometrien, wie z.B. Zylinder, Hohlzylinder, Mehrlochzylinder, Ringe, Granulatbruch, Trilobes oder Wabenstrukturen.

Die Formkörper aus Trägermaterial können durch in der keramischen Verarbeitung bekannte Formgebungsverfahren, wie z.B. Trockenpressen, Granulieren oder Extrudieren, hergestellt werden.

Eingesetzt wird entweder bereits fertig getempertes Trägermaterial, also Magnesiumoxid oder eine Abmischung von Magnesiumoxid mit anderen Metalloxiden oder bevorzugt eine Vorstufe dieses Oxids oder dieser Oxide. Im Falle eines Magnesiumsalzes kann z. B. Magnesiumcarbonat verwendet werden, welches erst während der anschließenden thermischen Behandlung in die oxidische Form übergeführt wird. Besonders bei der plastischen Aufbereitung für die Extrusion ist die Verwendung von MgCO₃ vorteilhaft, da es im Gegensatz zu MgO nicht zur Hydratation neigt.

Zur Formgebung können dem Feststoff Wasser sowie organische und/oder anorganische Additive zugegeben werden, bei trockener Verarbeitung teilweise auch geringe Mengen an Grafit.

Der Formgebung und gegebenenfalls anschließenden Trocknung folgt die thermische Behandlung.

Die Temperaturbehandlung der Grünkörper zur Ausbildung von porösen MgO-haltigen Trägem, findet bei solchen Temperaturen statt, bei denen sich der poröse Träger unter Sintern der anorganischen Bestandteile des Grünkörpers ausbildet. Typische Sintertemperaturen liegen oberhalb von 900 °C; es sind jedoch auch niedrigere Sintertemperaturen möglich. Beim Einsatz von Magnesiumsalzen, wie Magnesiumcarbonat, ist oberhalb von 900 °C eine vollständige Überführung in Magnesiumoxid gewährleistet.

Bevorzugt werden Sintertemperaturen im Bereich zwischen 1000 und 1300 °C. Mit steigender Sintertemperatur verringert sich dabei einerseits die Hydratationsneigung des anorganischen Trägermaterials, insbesondere des MgO, und die mechanische Festigkeit der Formkörper steigt. Andererseits verringert sich die offene Porosität und damit die innere Oberfläche des porösen Trägers.

Die Porosität des Trägers ist entscheidend für die Wirksamkeit des Katalysators. Porosität ist wichtig für einen ungehinderten Stofftransport, d.h. für den An- und Abtransport von Edukten und Produkten zur bzw. von der aktiven Oberfläche, welcher seinerseits bei hohen Betriebstemperaturen entscheidendes, d.h. geschwindigkeitsbestimmendes Kriterium für die N₂O Zersetzung ist. Mit der Auswahl des Trägermaterials kann somit auf die Aktivität und die Selektivität des fertigen Katalysators entscheidend Einfluß ausgeübt werden. Die getrennte Herstellung von Träger und Ceroxid-Funktionsschicht erlaubt die optimale Einstellung der gewünschten Eigenschaften, wie der Porosität, der Morphologie und der Textur. Dieses ist ohne Separierung von Trägermaterial und Ceroxid-Funktionsschicht nicht möglich.

Die offene Porosität der porösen Träger liegt typischerweise zwischen 20 und 60 %, bevorzugt zwischen 40 und 50 %, bezogen auf das Gesamtvolumen des keramischen Trägers. Unter offener Porosität versteht der Fachmann den Anteil der Poren im Formkörper, der mit mindestens einer Oberfläche des Formkörpers in Verbindung steht. Der poröse Träger besitzt vorzugsweise ein Gesamtvolumen an offenen Poren zwischen 100 und 600 mm³/g und besonders bevorzugt zwischen 200 und 350 mm³/g.

Die mittlere Porengröße des porösen Trägers beträgt typischerweise 30 bis 300 nm (ermittelt durch Quecksilberporosimetrie). Bevorzugt ist die Verteilung der Porendurchmesser bimodal, wobei die kleineren Porendurchmesser vorzugsweise im Bereich von 20 bis 50 nm liegen und die größeren Porendurchmesser vorzugsweise im Bereich von 200 bis 400 nm liegen.

Die spezifische Oberfläche des porösen Trägers beträgt vorzugsweise zwischen 1 und 200 m²/g und besonders bevorzugt zwischen 10 und 50 m²/g (gemessen nach BET).

Die im Einzelfall gewählte Sintertemperatur bei der Herstellung des porösen Trägers erfolgt je nach geplanter Einsatztemperatur und anderer Anforderungen an den Katalysator im speziellen Fall.

Der erfindungsgemäße Katalysator ist des weiteren dadurch gekennzeichnet, dass der keramische Träger oberflächlich zunächst mit mindestens einer Funktionsschicht aus Ceroxid und sodann mit mindestens einer weiteren, oxidisches Kobalt enthaltenden Funktionsschicht beschichtet ist.

Der mindestens dreistufige Aufbau poröser Träger - Ceroxid-Funktionsschicht - oxidisches Kobalt enthaltende Funktionsschicht ist dabei notwendige Voraussetzung, um die gewünschten Eigenschaften des Katalysators zu gewährleisten. Die mehrschichtige Struktur der erfindungsgemäßen Katalysatoren lässt sich beispielsweise mit dem Elektronenmikroskop feststellen.

Die Zwischenschicht aus Ceroxid erfüllt mehrere Aufgaben gleichzeitig. Zunächst verhindert sie beim Einsatz im Hochtemperaturbereich als "Diffusionsbarriere" eine Festkörperreaktion zwischen dem porösen Träger, insbesondere dem MgO-haltigem Träger, und der Co-haltigen Aktivkomponente, die zur Deaktivierung des Katalysators führen würde. Darüber hinaus besitzt Ceroxid selbst eine wenn auch geringe eigene katalytische Aktivität für die Zersetzung von N₂O und besitzt des weiteren die Eigenschaft, die Selektivität des N₂O-Abbaus gegenüber der Zersetzung von NOₓ im Hochtemperaturbereich zu verbessern. Im Niedrigtemperaturbereich (bei Einsatz als Tertiärkatalysator) verringert die Ceroxidschicht die Anfälligkeit des Katalysators gegenüber NOₓ im Abgas.

Bei der Ceroxid-Funktionsschicht kann es sich um reines Ceroxid handeln, insbesondere um CeO₂, oder es kann sich um Mischoxide handeln mit Ceroxid als Hauptkomponente. In typischen Mischoxiden sind bis zu 50 Mol-%, vorzugsweise bis zu 20 Mol-% der Cerionen durch andere Metallionen ersetzt, beispielsweise durch Ionen der zweiten Hauptgruppe des Periodensystems und/oder der Lanthaniden, insbesondere des Sr, Ca, Y, Sc, Sm, La und/oder des Gd.

Die Ceroxid-Funktionsschicht kann bevorzugt über Imprägnierung aufgebracht werden.

Dazu können die gesinterten porösen Träger in einer wässrigen Lösung eines Ce-Salzes oder eines Gemisches von Cersalz und Salzen anderer Metalle, besonders bevorzugt in einer Lösung von Ce-Nitrat, getränkt werden.

Eine verbesserte Aufnahmefähigkeit des Trägers unter Ausnutzung seiner Porosität kann durch Anlegen eines Vakuums erreicht werden.

Konzentration und Volumen der Imprägnierlösungen können willkürlich gewählt werden, je nachdem, wie viel Material für die Ceroxid-Funktionsschicht aufgebracht werden soll.

Die Einwirkzeit kann dabei vorzugsweise 15 bis 30 Minuten betragen. Längere oder kürzere Einwirkungszeiten sind ebenfalls möglich.

Nach der Imprägnierung werden die nun mit den Materialien für den Aufbau der Ceroxid-Funktionsschicht beschichteten oder infiltrierten keramischen Träger entweder nur getrocknet oder aber gesintert.

Diese Imprägnierung mit Materialien für den Aufbau der Ceroxid-Funktionsschich kann, falls erforderlich, mehrfach wiederholt werden. Bereits mit Materialien für den Aufbau der Ceroxid-Funktionsschicht beschichtete Träger können mehrere Male, beispielsweise ein bis drei weitere Male, derselben Prozedur unterworfen werden. Damit erhöht sich die spätere Schichtdicke der Ceroxid-Funktionsschicht.

Die positiven Wirkungen des Ceroxid auf die katalytische Reaktion verstärken sich, allerdings steigt der Herstellungsaufwand und der Preis des Katalysators. Dennoch ergibt sich so die Möglichkeit, einen leichteren und um Größenordnungen preiswerteren sinterstabilen N₂O-Katalysator herzustellen als bei Verwendung eines kompakten Ceroxidträgers.

Nach der Herstellung der Ceroxid-Funktionsschicht wird der beschichtete keramische Träger mit einer Kobaltoxid-enthaltenden katalytisch aktiven Phase beschichtet.

Dabei kann es sich um beliebige oxidisches Kobalt enthaltende aktive Materialien handeln.

Vorzugsweise besitzt die oxidische Kobaltverbindung oder bei Vorliegen mehrerer oxidischer Kobaltverbindungen mindestens eine von diesen Perowskit- oder Spinellstruktur. Beispiele für erfindungsgemäß verwendbare Kobaltverbindungen sind Co₃O₄ oder Kobalt-Mischoxide, wie LaCoO₃. Auch die Verwendung entsprechend dotierter Verbindungen wie z.B. CuₓCo₃₋ₓO₄ oder La₁₋ₓSrₓCoO₃ ist erfindungsgemäß möglich, wobei x eine reelle Zahl zwischen 0,01 bis 0,5 bedeutet.

In einer weiteren bevorzugten Ausführungsform liegt zumindest ein Teil des Kobalt im chemisch dreiwertigen Zustand vor. In dieser Ausführungsform enthält der erfindungsgemäße Katalysator oxidische Kobaltverbindungen, bei denen mindestens 30 %, vorzugsweise mehr als 50 % der Co-Atome in chemisch dreiwertigem Zustand vorliegen. Der Oxidationszustand des Kobalt kann mit Hilfe von Photoelektronenspektroskopie (XPS) erkannt werden.

Die wesentlichen Katalysatorkomponenten, d.h. die porösen Trägermaterialien, die Ceroxid-Verbindungen sowie die oxidisches Kobalt enthaltenden Verbindungen sollten eine möglichst hohe spezifische Oberfläche aufweisen, um eine möglichst hohe Aktivität des Katalysators zu erreichen. Die spezifische Oberfläche des fertigen Katalysators bewegt sich im Bereich der spezifischen Oberfläche des porösen Trägers. Bevorzugt liegt die spezifische Oberfläche des fertigen Katalysators im Bereich von 5 bis 150 m²/g.

Auch die Beschichtung mit oxidischem Kobalt enthaltenden Schichten erfolgt bevorzugt über Imprägnierung.

Dazu können die mit Cersalzen imprägnierten und zumindest getrockneten, vorzugsweise jedoch calzinierten porösen Träger in einer wässrigen Lösung eines Co-Salzes, bevorzugt Co-Nitrat oder Co Acetat, oder in einer gemischten Lösung, welche die Kationen des gewünschten Mischoxides in stöchiometrischem Verhältnis enthält, getränkt werden.

Eine verbesserte Aufnahmefähigkeit kann auch in diesem Fall durch Anlegen eines Vakuums erreicht werden.

Konzentration und Volumen der Imprägnierlösung für die Aktivkomponente können beliebig gewählt werden, je nachdem, wie viel Aktivkomponente aufgebracht werden soll.

Die Einwirkzeit kann dabei vorzugsweise 15 bis 30 Minuten betragen. Längere oder kürzere Einwirkungszeiten sind ebenfalls möglich.

Diese Imprägnierung mit Imprägnierlösung für die Aktivkomponente kann, falls erforderlich, mehrfach wiederholt werden.

Bereits mit Kobalt beschichtete Träger können mehrfach, vorzugsweise ein- bis drei weitere Male, derselben Prozedur unterworfen werden. Damit erhöht sich die spätere Schichtdicke der Kobaltoxid enthaltenden aktiven Schicht.

Die aufgebrachten Schichten aus Ce-Salzen bzw. Ce-Salzgemischen und Co-Salzen bzw. Co-Salzgemischen können nach jeder Imprägnierung eingebrannt werden.

Es genügt aber auch eine Trocknung bei vergleichsweise niedrigen Temperaturen, beispielsweise bei Temperaturen um 200 °C, um die aufgebrachte Schicht zu fixieren.

Nach Abschluss der letzten Imprägnierung kann das endgültige Einbrennen der aufgebrachten Schichten erfolgen.

Die Temperatur ergibt sich hierbei hauptsächlich aus dem angestrebten Einsatzgebiet des Katalysators.

Bei einem Sekundärkatalysator muss die Einbrenntemperatur oberhalb der späteren Arbeitstemperatur, also in der Regel oberhalb von 900 °C liegen.

Dagegen können die Schichten eines Tertiärkatalysators bei deutlich niedrigeren Temperaturen, beispielsweise bei 600 °C, eingebrannt werden.

Der erfindungsgemäße Katalysator zeichnet sich durch ein vergleichsweise niedriges Schüttgewicht aus. Dieses beträgt typischerweise bis zu 2 g/cm³, vorzugsweise 0,5 bis 2 g/cm³, besonders bevorzugt 0,75 bis 1,5 g/cm³. Das Schüttgewicht wird durch Einfüllen des Katalysators in einen Zylinder von bekanntem Volumen und Ermitteln der eingefüllten Masse bestimmt.

Der Anteil an porösem Träger, bezogen auf die Gesamtmasse des Katalysators, beträgt vorzugsweise mindestens 85 Gew. %, besonders bevorzugt 90 bis 95 Gew. %.

Der Anteil an Ceroxid-Funktionsschicht, bezogen auf die Gesamtmasse des Katalysators, beträgt vorzugsweise 2 bis 14 Gew. %, besonders bevorzugt 5 bis 10 Gew. %.

Der Anteil an oxidisches Kobalt enthaltender Funktionsschicht, bezogen auf die Gesamtmasse des Katalysators, beträgt vorzugsweise 0,1 bis 5 Gew. %, besonders bevorzugt 1 bis 5 Gew. %.

Die Erfindung betrifft darüber hinaus ein Verfahren zur Herstellung des oben beschriebenen Katalysators mit den Massnahmen:
i) Herstellen eines porösen Trägers aus polykristallinem oder glasartigem anorganischen Material bestehend aus Magnesiumoxid oder aus keramischen Mischoxid bestehend zu mindestens 50 Mass-% aus Magnesiumoxid durch Sintern eines Grünkörpers in an sich bekannter Weise,
ii) ein- oder mehrfaches Imprägnieren des in Schritt i) erhaltenen porösen Trägers mit einer Lösung, die ein gelöstes Cersalz enthält,
iii) Trocknen und/oder Calcinieren des in Schritt ii) erhaltenen imprägnierten Trägers zur Herstellung einer Ceroxid-Funktionsschicht oder eines Vorläufers der Ceroxid-Funktionsschicht,
iv) ein- oder mehrfaches Imprägnieren des in Schritt iii) erhaltenen beschichteten Trägers mit einer Lösung, die ein gelöstes Kobaltsalz enthält, und
v) Trocknen und/oder Calcinieren des in Schritt iv) erhaltenen imprägnierten Trägers zur Herstellung einer oxidisches Kobalt enthaltenden Funktionsschicht oder eines Vorläufers einer oxidisches Kobalt enthaltenden Funktionsschicht.

Die Zusammensetzung des erfindungsgemäßen Katalysators und die Variationsbreite des erfindungsgemäßen Herstellungsverfahrens erlauben einen flexiblen Einsatz dieses Werkstoffsystems als Katalysator für die N₂O-Zersetzung in Anlagen oder Verfahren, in denen N₂O entsteht. Dabei kann es sich um Anlagen der industriellen Produktion, um Müllverbrennungsanlagen, um Kläranlagen, um Gasturbinen oder um Kraftfahrzeuge handeln. Bei den Anlagen der industriellen Produktion kann es sich insbesondere um Anlagen zur Herstellung von Salpetersäure oder von Caprolactam handeln, bei denen der erfindungsgemäße Katalysator sowohl als Sekundärkatalysator im Hochtemperaturbereich, als auch als Tertiärkatalysator im Niedrigtemperaturbereich eingesetzt werden kann; oder es kann sich um Anlagen zur Herstellung von mehrwertigen Carbonsäuren handeln, insbesondere mehrwertigen aliphatischen Carbonsäuren, ganz besonders bevorzugt Adipinsäure, bei denen ein Vorläufer dieser Säure mit Salpetersäure oxidiert wird.

Die katalytische Aktivität für die Zersetzung von N₂O und damit die erforderliche bzw. vom Prozess vorgegebene Arbeitstemperatur des Katalysators kann durch die thermische Vorbehandlung des Trägermaterials, wodurch eine bestimmte Porosität resultiert (= innere Oberfläche), durch seine Geometrie (äußere Oberfläche) sowie durch Variation der Dicke der Ceroxid-Funktionsschicht und/oder der Cobaltoxid-Funktionsschicht und durch Variation der Einbrenntemperatur dieser Schichten eingestellt werden.

Eine der wichtigsten Voraussetzungen für die Langzeitstabilität des erfindungsgemäßen Katalysators ist, dass die beiden Funktionsschichten aus Ceroxid und Kobaltoxid nacheinander und nicht gleichzeitig (z.B. durch Imprägnieren mit einer gemischten Ce-Co-Lösung) aufgebracht werden.

Bei einer solchen Simultanimprägnierung, wie in JP-A-48/089,185 für Katalysatoren auf der Basis von ZrO₂ beschrieben, könnte Ceroxid nicht als Diffusionsbarriere wirken und es würden bei höheren Temperaturen Kobaltionen in das keramische Trägermaterial, z.B. in das MgO-Gitter, eingebaut werden, was zu einer Deaktivierung des Katalysators führen würde. Vor dem Aufbringen der Kobaltoxid enthaltenden Schicht muss die Ceroxid-Funktionsschicht auf dem keramischen Träger durch Trocknung, beispielsweise bei etwa 200 °C, und/oder durch Einbrennen, beispielsweise bei 500 - 1000 °C, fixiert werden.

Die erfindungsgemäßen Katalysatoren können in allen Prozessen, in denen die Zersetzung von Lachgas erforderlich ist, eingesetzt werden.

Bevorzugt werden die erfindungsgemäßen Katalysatoren in industriellen Anlagen, in denen Lachgas entsteht, in Müllverbrennungsanlagen, Kläranlagen, Gasturbinen oder in Kraftfahrzeugen eingesetzt. Besonders bevorzugt in Anlagen zur Herstellung von Caprolactam und insbesondere in Anlagen zur Herstellung von Salpetersäure. Ganz besonders bevorzugt werden die erfindungsgemäßen Katalysatoren als Sekundärkatalysatoren oder als Tertiärkatalysatoren in Salpetersäureanlagen oder in Anlagen zur Herstellung von Caprolactam eingesetzt.

Beim Einsatz als Tertiärkatalysator in Salpetersäureanlagen oder Caprolactamanlagen kommen die erfindungsgemäßen Katalysatoren typischerweise im Temperaturbereich von 300 bis 700 °C, vorzugsweise 400 bis 700 °C, insbesondere 450 bis 650 °C zum Einsatz. Die Positionierung des Tertiärkatalysators erfolgt vorzugsweise zwischen Absorptionsturm und Restgasturbine, besonders bevorzugt direkt vor der Restgasturbine. In einer weiteren bevorzugten Ausführungsform als Tertiärkatalysator wird der erfindungsgemäße Katalysator nach einer vorgeschalteten Stufe zur Verminderung des Gehaltes an NOₓ eingesetzt; dabei betragen die Eintrittskonzentrationen an NOₓ in die nachgeschaltete Stufe weniger als 200 ppm, vorzugsweise weniger als 100 ppm und ganz besonders bevorzugt weniger als 50 ppm. Der Einsatz des erfindungsgemäßen Katalysators als Tertiärkatalysator erfolgt vorzugsweise bei Drucken von 3 bis 15 bar (absolut), besonders bevorzugt bei Drucken von 4 bis 12 bar (absolut). Der Einsatz des erfindungsgemäßen Katalysators als Tertiärkatalysator erfolgt vorzugsweise bei Raumgeschwindigkeiten von 2000 bis 200000 h⁻¹, besonders bevorzugt bei Raumgeschwindigkeiten von 5000 bis 100000 h⁻¹, und ganz besonders bevorzugt bei Raumgeschwindigkeiten von 10000 bis 50000 h⁻¹. Der erfindungsgemäße Katalysator wird als Tertiärkatalysator bevorzugt in Wabenform eingesetzt oder so eingesetzt, dass dieser lateral durchströmt werden kann, beispielsweise in Radialkörben.

Beim Einsatz als Sekundärkatalysator in Salpetersäureanlagen oder in Caprolactamanlagen kommen die erfindungsgemäßen Katalysatoren typischerweise im Temperaturbereich von 800 bis 1000 °C, vorzugsweise 850 bis 950 °C zum Einsatz. Die Positionierung des Sekundärkatalysators erfolgt dabei stromabwärts zum Katalysator für die Ammoniakverbrennung und vor dem Absorptionsturm, besonders bevorzugt zwischen dem Katalysator für die Ammoniakverbrennung und dem ersten Wärmetauscher. Der Einsatz des erfindungsgemäßen Katalysators als Sekundärkatalysator erfolgt vorzugsweise bei Raumgeschwindigkeiten von 10000 bis 300000 h⁻¹, besonders bevorzugt bei Raumgeschwindigkeiten von 20000 bis 200000 h⁻¹, und ganz besonders bevorzugt bei Raumgeschwindigkeiten von 30000 bis 100000 h⁻¹. Der erfindungsgemäße Katalysator wird als Sekundärkatalysator ebenfalls bevorzugt so eingesetzt, dass dieser einen möglichst geringen Druckverlust erzeugt, beispielsweise in Form einer Schüttung von Hohlzylindern oder in Wabenform.

Die vorstehend beschriebenen Verwendungen sind ebenfalls Gegenstand der vorliegenden Erfindung.

Die nachfolgenden Beispiele beschreiben die Erfindung ohne diese zu begrenzen.

### Katalysatorherstellung

### Beispiel 1: Katalysator I

Eine Mischung Magnesit (MgCO₃) und pseudo Boehmit (AlO(OH)) wurde plastifiziert, als Vollstrang extrudiert. Der erhaltene Strang wurde in Vollzylinder von 6 mm Länge und 4 mm Durchmesser zerschnitten und diese Grünkörper wurden zwei Stunden lang bei 1200°C gesintert. Es resultierten keramische Träger der Zusammensetzung 0,95 Mol MgO und 0,05 Mol Al₂O₃. Das durch Quecksilberporosimetrie ermittelte Porenvolumen betrug 350 mm³/g. Der durch Quecksilberporosimetrie ermittelte Gehalt an offenen Poren betrug 58 %.

400 g dieser keramischen Träger wurden mit 400 ml einer 0,5 molaren wässrigen Lösung aus Cernitrat versetzt und 30 Minuten durch Anlegen eines Vakuums behandelt. Anschließend wurde zwei Stunden bei 120 °C getrocknet und zwei Stunden bei 900 °C geglüht. Es resultierten mit Ceroxid imprägnierte keramische Träger.

400 g dieser mit Ceroxid imprägnierten keramischen Träger wurden mit 400 ml einer 0,5 molaren wässrigen Lösung aus Kobaltacetat versetzt und 30 Minuten durch Anlegen eines Vakuums behandelt. Anschließend wurde die restliche Lösung abgetrennt, die imprägnierten Formkörper zwei Stunden bei 120 °C getrocknet und zwei Stunden bei 900 °C geglüht. Es resultierten mit Ceroxid und mit Cobaltoxid imprägnierte keramische Träger, deren Porosität durch Quecksilberporosimetrie wie folgt charakterisiert wurde:
Porenvolumen: 340 mm³/g
Gehalt an offenen Poren: 52 %.

### Beispiel 2: Katalysator II

Eine Mischung Magnesit (MgCO₃) und pseudo Boehmit (AIO(OH)) wurde plastifiziert, als Vollstrang extrudiert. Der erhaltene Strang wurde in Vollzylinder von 6 mm Länge und 4 mm Durchmesser zerschnitten und diese Grünkörper wurden zwei Stunden lang bei 1200°C gesintert. Es resultierten keramische Träger der Zusammensetzung 0,80 Mol MgO und 0,20 Mol Al₂O₃. Das durch Quecksilberporosimetrie ermittelte Porenvolumen betrug 290 mm³/g. Der durch Quecksilberporosimetrie ermittelte Gehalt an offenen Poren betrug 49 %. Außerdem wurde eine BET-Oberfläche von 19,5 m²/g ermittelt.

400 g dieser keramischen Träger wurden mit 400 ml einer 0,5 molaren wässrigen Lösung aus Cernitrat versetzt und 30 Minuten durch Anlegen eines Vakuums behandelt. Anschließend wurde zwei Stunden bei 120 °C getrocknet und zwei Stunden bei 900 °C geglüht. Es resultierten mit Ceroxid imprägnierte keramische Träger.

400 g dieser mit Ceroxid imprägnierten keramischen Träger wurden mit 400 ml einer 0,5 molaren wässrigen Lösung aus Kobaltacetat versetzt und 30 Minuten durch Anlegen eines Vakuums behandelt. Anschließend wurde die restliche Lösung abgetrennt, die imprägnierten Formkörper zwei Stunden bei 120 °C getrocknet und zwei Stunden bei 900 °C geglüht. Es resultierten mit Ceroxid und mit Cobaltoxid imprägnierte keramische Träger, deren Porosität durch Quecksilberporosimetrie wie folgt charakterisiert wurde:
Porenvolumen: 289 mm³/g
Gehalt an offenen Poren: 42 %.

Darüber hinaus wurde eine BET-Oberfläche von 19, 6 g/m² ermittelt.

### Beispiel 3: Katalysator III

Es wurde wie bei der Herstellung von Katalysator II gearbeitet mit der Änderung, dass die mit Ceroxid imprägnierten keramischen Träger zweimal mit der wässrigen Lösung aus Kobaltacetat imprägniert wurden. Dazu wurden die nach der ersten Imprägnierung mit Kobaltacetat erhaltenen getrockneten Formkörper nochmals mit 400 ml der 0,5 molaren Kobaltacetatlösung versetzt und 30 Minuten durch Anlegen eines Vakuums behandelt. Anschließend wurde zwei Stunden bei 120 °C getrocknet und zwei Stunden bei 900 °C geglüht.

Es resultierten mit Ceroxid und mit Cobaltoxid imprägnierte keramische Träger, deren Porosität durch Quecksilberporosimetrie wie folgt charakterisiert wurde:
Porenvolumen: 289 mm³/g
Gehalt an offenen Poren: 48 %.

Darüber hinaus wurde eine BET-Oberfläche von 19, 6 g/m² ermittelt.

### Beispiel 4: Katalysator IV

Es wurde wie bei der Herstellung von Katalysator II gearbeitet mit der Änderung, dass 400 g der mit Ceroxid imprägnierten keramischen Träger mit 400 ml einer 0,25 molaren wässrigen Lösung aus Kobaltacetat versetzt wurden und 300 Minuten durch Anlegen eines Vakuums behandelt wurden. Anschließend wurde die restliche Lösung abgetrennt, die imprägnierten Formkörper zwei Stunden bei 120 °C getrocknet und zwei Stunden bei 900 °C geglüht. Es resultierten mit Ceroxid und mit Cobaltoxid imprägnierte keramische Träger.

### Beispiel 5: Katalysator V

Eine Mischung Magnesit (MgCO₃) und pseudo Boehmit (AlO(OH)) wurde plastifiziert, als Vollstrang extrudiert. Der erhaltene Strang wurde in Vollzylinder von 6 mm Länge und 4 mm Durchmesser zerschnitten und diese Grünkörper wurden zwei Stunden lang bei 1200°C gesintert. Es resultierten keramische Träger der Zusammensetzung 0,8 Mol MgO und 0,2 Mol Al₂O₃.

400 g dieser keramischen Träger wurden mit 400 ml einer 0,5 molaren wässrigen Lösung aus Cernitrat versetzt und 30 Minuten durch Anlegen eines Vakuums behandelt. Anschließend wurde 30 Minuten bei 120 °C getrocknet.

Diese Behandlung, nämlich Imprägnieren mit Cernitriat und Trocknen bei 120°C, wurde noch drei Mal wiederholt. Bei der letzten Imprägnierstufe wurde allerdings 1 Stunde lang bei 120°C getrocknet. Anschließend wurde der imprägnierte Träger zwei Stunden bei 900 °C geglüht. Es resultierten mit Ceroxid imprägnierte keramische Träger.

400 g dieser mit Ceroxid imprägnierten keramischen Träger wurden mit 400 ml einer 0,5 molaren wässrigen Lösung aus Kobaltacetat versetzt und 30 Minuten durch Anlegen eines Vakuums behandelt. Anschließend wurde die restliche Lösung abgetrennt, die imprägnierten Formkörper 30 Minuten lang bei 120 °C getrocknet.

Diese Behandlung, nämlich Imprägnieren mit Kobaltacetat und Trocknen bei 120°C, wurde noch drei Mal wiederholt. Bei der letzten Imprägnierstufe wurde allerdings 1 Stunde lang bei 120°C getrocknet. Anschließend wurde der imprägnierte Träger zwei Stunden bei 900 °C geglüht. Es resultierten mit Ceroxid und Kobaltoxid imprägnierte keramische Träger, deren Porosität durch Quecksilberporosimetrie wie folgt charakterisiert wurde:
Porenvolumen: 204 mm³/g
Gehalt an offenen Poren: 43 %.

Darüber hinaus wurde eine BET-Oberfläche von 14,2 g/m² ermittelt.

### Beispiel 6: Katalysator VI

Ein Trägermaterial wurde wie bei Katalysator V hergestellt. Die gesinterten Pellets wurden anschließend zu Pulver mit Teilchengrößen von kleiner gleich 250 µm vermahlen.

400 g dieses keramischen Trägerpulvers wurden mit 400 ml einer 0,5 molaren wässrigen Lösung aus Cernitrat versetzt und 30 Minuten durch Anlegen eines Vakuums behandelt. Anschließend wurde 2 Stunden lang bei 120 °C getrocknet. Es resultierte mit Ceroxid imprägniertes keramisches Trägerpulver.

400 g dieses mit Ceroxid imprägnierten keramischen Trägerpulvers wurden mit 400 ml einer 0,5 molaren wässrigen Lösung aus Kobaltacetat versetzt und 30 Minuten durch Anlegen eines Vakuums behandelt. Anschließend wurde die restliche Lösung abgetrennt und das imprägnierte Pulver 2 Stunden lang bei 120 °C getrocknet.

Das Pulver wurde zu Tabletten verpresst und 2 Stunden lang bei 600 °C gesintert. Die erhaltenen Sinterkörper wurden zu Granulat mit Durchmessern zwischen 2,0 bis 2,5 mm zerkleinert. Es resultierten mit Ceroxid und Kobaltoxid imprägnierte keramische Träger, deren Porosität durch Quecksilberporosimetrie wie folgt charakterisiert wurde:
Porenvolumen: 454 mm³/g
Gehalt an offenen Poren: 57 %.

Darüber hinaus wurde eine BET-Oberfläche von 40,3 g/m² ermittelt.

### Beispiel 7: Katalysator VII

Es wurde wie bei der Herstellung von Katalysator VI gearbeitet mit der Änderung, dass das mit Ceroxid imprägnierte keramische Trägerträgerpulver mit 400 ml einer 1,0 molaren wässrigen Lösung aus Kobaltnitrat imprägniert wurde.

Es resultierten mit Ceroxid und mit Cobaltoxid imprägnierte keramische Träger, deren Porosität durch Quecksilberporosimetrie wie folgt charakterisiert wurde:
Porenvolumen: 321 mm³/g
Gehalt an offenen Poren: 42,5 %.

Darüber hinaus wurde eine BET-Oberfläche von 31,1 g/m² ermittelt.

### Anwendungsbeispiele

### Beispiele A1 bis A7

Die Aktivität der Katalysatoren wurde in einem Durchfluss-Quarzreaktor mit programmierbarer Temperatursteuerung und mit online Analytik bestimmt. Dazu wurden auf einer engmaschigen Cordierit-Wabe eine Schüttung von jeweils 13,9 g des zu untersuchenden Katalysators platziert und mit einer Raumgeschwindigkeit von jeweils 10.000 h⁻¹ wurde ein Feedgas mit den nachfolgend beschriebenen Zusammensetzungen durch den Reaktor geleitet. Dabei wurde die Temperatur ausgehend von einem Startwert von 50 °C mit einer Aufheizgeschwindigkeit von 5 K/Minute bis auf eine Endtemperatur von 900 °C erhöht. Die Temperaturmessung erfolgte an der Katalysatorschüttung. Am Ausgang des Reaktors wurde der Gehalt an ausgewählten Bestandteilen des Gases IR-spektroskopisch bestimmt.

In der nachfolgenden Tabelle sind die Temperaturen angegeben, bei denen 90 % bzw. 100 % Umsatz (entsprechend der Empfindlichkeit des IR-Analysators) des N₂O erreicht wurden.

| Beispiel | Katalysator | 90 % N₂O Umsatz bei Temperatur (°C) | 100 % N₂O Umsatz bei Temperatur (°C) |
|---|---|---|---|
| A1 ¹⁾ | I | 660 | 740 |
| A2 ¹⁾ | II | 760 | >900 |
| A3 ¹⁾ | III | 810 | >950 |
| A4 ¹⁾ | IV | 785 | >900 |
| A5 ²⁾ | V | 590 | 680 |
| A6 ²⁾ | VI | 560 | 600 |
| A7 ²⁾ | VII | 495 | 560 |

| | | | |
|---|---|---|---|
| ¹⁾ Zusammensetzung des Feed: 84,66 % N₂ 6,00 % O₂ 0,20 % N₂O 9,0 % NO 0,14 % H₂O ²⁾ Zusammensetzung des Feed: 96,8 % N₂ 2,50 % O₂ 0,20 % N₂O 0,50 % H₂O | | | |

## Patentansprüche

1. Katalysator für die Zersetzung von N₂O in Stickstoff und Sauerstoff in der Gasphase mit einem porösen Träger aus polykristallinem oder glasartigem anorganischen Material bestehend aus Magnesiumoxid oder aus keramischem Mischoxid bestehend zu mindestens 50 Masse % aus Magnesiumoxid, einer darauf aufgebrachten Ceroxid-Funktionsschicht, die aus Ceroxid besteht oder aus Mischoxiden, bei denen bis zu 50 Mol-% der Cerionen durch andere Metallionen ersetzt sind, und einer darauf aufgebrachten Schicht aus oxidischem Kobalt enthaltenden Material.

2. Katalysator nach Anspruch 1, **dadurch gekennzeichnet, dass** das keramische Mischoxid als natürliche Verunreinigung oder als gezielte Beimengung neben MgO bis zu 50 Masse %, bevorzugt bis zu 20 Masse %, an anderen anorganischen Oxiden enthält, insbesondere SiO₂, Al₂O₃, CaO und/oder Fe₂O₃.

3. Katalysator nach einem der Ansprüche 1 bis 2, **dadurch gekennzeichnet, dass** die offene Porosität des porösen Trägers zwischen 20 und 60 %, bevorzugt zwischen 40 und 50 %, bezogen auf das Gesamtvolumen des porösen Trägers, liegt.

4. Katalysator nach einem der Ansprüche 1 bis 3, **dadurch gekennzeichnet, dass** der Katalysator ein Verhältnis von Oberfläche zu Volumen von 0,5 bis 10 mm⁻¹, insbesondere 1 bis 5 mm⁻¹, aufweist.

5. Katalysator nach einem der Ansprüche 1 bis 4, **dadurch gekennzeichnet, dass** die Schicht aus oxidischem Kobalt enthaltendem Material aus Kobaltoxid oder aus Kobalt enthaltenden Mischoxiden besteht, wobei vorzugsweise mindestens eine oxidisches Kobalt enthaltende Verbindung Perowskit- oder Spinellstruktur aufweist oder wobei die Schicht aus oxidischem Kobalt enthaltendem Material Kobaltverbindungen enthält, bei denen mindestens 30 %, vorzugsweise mehr als 50 % der Co-Atome in chemisch dreiwertigem Zustand vorliegen.

6. Katalysator nach einem der Ansprüche 1 bis 5, **dadurch gekennzeichnet, dass** dessen Schüttgewicht 0,5 bis 2 g/cm³, bevorzugt 0,75 bis 1,5 g/cm³ beträgt.

7. Katalysator nach einem der Ansprüche 1 bis 6, **dadurch gekennzeichnet, dass** dessen Anteil an porösem Träger mindestens 85 Gew. % beträgt, dass dessen Anteil an Ceroxid-Funktionsschicht 2 bis 14 Gew. % beträgt und dass dessen Anteil an Schicht aus oxidischem Kobalt enthaltenden Material 0,1 bis 5 Gew. % beträgt, wobei die Angaben sich auf das Gesamtgewicht des Katalysators beziehen.

8. Verfahren zur Herstellung des Katalysators nach Anspruch 1 mit den Massnahmen:
i) Herstellen eines porösen Trägers aus polykristallinem oder glasartigem anorganischen Material bestehend aus Magnesiumoxid oder aus keramischem Mischoxid bestehend zu mindestens 50 Masse % aus Magnesiumoxid durch Sintern eines Grünkörpers in an sich bekannter Weise,
ii) ein- oder mehrfaches Imprägnieren des in Schritt i) erhaltenen porösen Trägers mit einer Lösung, die ein gelöstes Cersalz enthält,
iii) Trocknen und/oder Calcinieren des in Schritt ii) erhaltenen imprägnierten Trägers zur Herstellung einer Ceroxid-Funktionsschicht oder eines Vorläufers der Ceroxid-Funktionsschicht,
iv) ein- oder mehrfaches Imprägnieren des in Schritt iii) erhaltenen beschichteten Trägers mit einer Lösung, die ein gelöstes Kobaltsalz enthält, und
v) Trocknen und/oder Calcinieren des in Schritt iv) erhaltenen imprägnierten Trägers zur Herstellung einer oxidisches Kobalt enthaltenden Funktionsschicht oder eines Vorläufers einer oxidisches Kobalt enthaltenden Funktionsschicht.

9. Verfahren nach Anspruch 8, **dadurch gekennzeichnet, dass** in Schritt i) Magnesiumoxid oder eine Abmischung von Magnesiumoxid mit anderen anorganischen Oxiden oder bevorzugt eine Vorstufe von Magnesiumoxids oder dieser anderen anorganischen Oxide eingesetzt werden, wobei ganz besonders bevorzugt als Vorstufe von Magnesiumoxid Magnesiumcarbonat eingesetzt wird.

10. Verfahren nach einem der Ansprüche 8 bis 9, **dadurch gekennzeichnet, dass** das Sintern des Grünkörpers in Schritt i) bei Temperaturen im Bereich zwischen 1000 und 1300 °C erfolgt.

11. Verfahren nach einem der Ansprüche 8 bis 10, **dadurch gekennzeichnet, dass** als Cersalz in Schritt ii) Ce-Nitrat verwendet wird.

12. Verfahren nach einem der Ansprüche 8 bis 11, **dadurch gekennzeichnet, dass** als Kobaltsalz in Schritt iv) Co-Nitrat oder Co-Acetat verwendet wird.

13. Verwendung des Katalysators nach einem der Ansprüche 1 bis 7 für die Zersetzung von Lachgas in Gasen, insbesondere in Abgasen oder Prozessgasen, ganz besonders bevorzugt in Anlagen der industriellen Produktion, in Kläranlagen, in Müllverbrennungsanlagen, in Gasturbinen oder in Kraftfahrzeugen.

14. Verwendung nach Anspruch 13, **dadurch gekennzeichnet, dass** es sich bei der Anlage der industriellen Produktion um eine Anlage zur Herstellung von Caprolactam, um eine Anlage zur Herstellung von Salpetersäure oder um eine Anlage zur Herstellung von mehrwertigen Carbonsäuren durch Oxidation mit Salpetersäure handelt.

15. Verwendung nach Anspruch 14, **dadurch gekennzeichnet, dass** die Katalysatoren als Sekundärkatalysatoren in Salpetersäureanlagen oder in Caprolactamanlagen bei Temperaturen von 800 bis 1000 °C, vorzugsweise 850 bis 950 °C, eingesetzt werden.

16. Verwendung nach Anspruch 14, **dadurch gekennzeichnet, dass** die Katalysatoren als Tertiärkatalysatoren in Salpetersäureanlagen oder in Caprolactamanlagen bei Temperaturen von 300 bis 700 °C, vorzugsweise 400 bis 700 °C, insbesondere 450 bis 650 °C, eingesetzt werden.

## Claims

1. A catalyst for the decomposition of N₂O into nitrogen and oxygen in the gas phase, which comprises a porous support composed of polycrystalline or vitreous inorganic material comprising magnesium oxide or a ceramic mixed oxide comprising at least 50% by mass of magnesium oxide, a cerium oxide functional layer comprising cerium oxide or mixed oxides in which up to 50 mol% of the cerium ions has been replaced by other metal ions, applied thereto and a layer of oxidic cobalt-containing material applied thereto.

2. The catalyst as claimed in claim 1, wherein the ceramic mixed oxide comprises, as natural contamination or as deliberate addition, not only MgO but up to 50% by mass, preferably up to 20% by mass, of other inorganic oxides, in particular SiO₂, Al₂O₃, CaO and/or Fe₂O₃.

3. The catalyst as claimed in either of claims 1 and 2, wherein the open porosity of the porous support is in the range from 20 to 60%, preferably from 40 to 50%, based on the total volume of the porous support.

4. The catalyst as claimed in any of claims 1 to 3,
wherein the catalyst has a ratio of surface area to volume of from 0.5 to 10 mm⁻¹, in particular from 1 to 5 mm⁻¹.

5. The catalyst as claimed in any of claims 1 to 4,
wherein the layer of material comprising oxidic cobalt comprises cobalt oxide or cobalt-containing mixed oxides, preferably at least one compound containing oxidic cobalt having a perovskite or spinel structure or the layer of material comprising oxidic cobalt comprises cobalt compounds in which at least 30%, preferably more than 50%, of the Co atoms are present in the chemically trivalent state.

6. The catalyst as claimed in any of claims 1 to 5,
wherein its bulk density is from 0.5 to 2 g/cm³, preferably from 0.75 to 1.5 g/cm³.

7. The catalyst as claimed in any of claims 1 to 6,
wherein its proportion of porous support is at least 85% by weight, its proportion of cerium oxide functional layer is from 2 to 14% by weight and its proportion of a layer of material comprising oxidic cobalt is from 0.1 to 5% by weight, with the figures being based on the total weight of the catalyst.

8. A process for producing the catalyst as claimed in claim 1, which comprises the measures:
i) production of a porous support composed of polycrystalline or vitreous inorganic material comprising magnesium oxide or a ceramic mixed oxide comprising at least 50% by mass of magnesium oxide by sintering a green body in a manner known per se,
ii) single or multiple impregnation of the porous support obtained in step i) with a solution containing a dissolved cerium salt,
iii) drying and/or calcination of the impregnated support obtained in step ii) to produce a cerium oxide functional layer or a precursor of the cerium oxide functional layer,
iv) single or multiple impregnation of the coated support obtained in step iii) with a solution containing a dissolved cobalt salt and
v) drying and/or calcination of the impregnated support obtained in step iv) to produce a functional layer comprising oxidic cobalt or a precursor of a functional layer comprising oxidic cobalt.

9. The process as claimed in claim 8, wherein magnesium oxide or a blend of magnesium oxide with other inorganic oxides or preferably a precursor of magnesium oxide or these other inorganic oxides is used in step i), with magnesium carbonate very particularly preferably being used as precursor of magnesium oxide.

10. The process as claimed in either of claims 8 and 9, wherein the sintering of the green body in step i) is carried out at temperatures in the range from 1000 to 1300°C.

11. The process as claimed in any of claims 8 to 10,
wherein Ce nitrate is used as cerium salt in step ii).

12. The process as claimed in any of claims 8 to 11, wherein Co nitrate or Co acetate is used as cobalt salt in step iv).

13. The use of the catalyst as claimed in any of clams 1 to 7 for the decomposition of nitrous oxide in gases, in particular in offgases or process gases, very particularly preferably in plants for industrial production, in water treatment plants, in waste incineration plants, in gas turbines or in motor vehicles.

14. The use as claimed in claim 13, wherein the plant for industrial production is a plant for preparing caprolactam, a plant for preparing nitric acid or a plant for preparing polybasic carboxylic acids by oxidation by means of nitric acid.

15. The use as claimed in claim 14, wherein the catalyst is used as secondary catalyst in nitric acid plants or in caprolactam plants at temperatures of from 800 to 1000°C, preferably from 850 to 950°C.

16. The use as claimed in claim 14, wherein the catalyst is used as tertiary catalyst in nitric acid plants or in caprolactam plants at temperatures of from 300 to 700°C, preferably from 400 to 700°C, in particular from 450 to 650°C.

## Revendications

1. Catalyseur pour la décomposition de N₂O en azote et oxygène en phase gazeuse, avec un substrat poreux en matériau polycristallin ou vitreux anorganique composé d'oxyde de magnésium ou d'oxyde mixte céramique composé à au moins 50 % en masse d'oxyde de magnésium, d'une couche fonctionnelle d'oxyde de cérium déposée sur celui-ci, qui se compose d'oxyde de cérium ou d'oxydes mixtes dans lesquels jusqu'à 50 % en moles des ions cérium sont remplacés par d'autres ions métalliques, et d'une couche déposée sur celle-ci de matériau contenant du cobalt oxydique.

2. Catalyseur selon la revendication 1, **caractérisé en ce que** l'oxyde mixte céramique contient, en tant qu'impureté naturelle ou additif spécifique, en plus de MgO jusqu'à 50 % en masse, de préférence jusqu'à 20 % en masse, d'autres oxydes anorganiques, en particulier SiO₂, Al₂O₃, CaO et/ou Fe₂O₃.

3. Catalyseur selon une des revendications 1 à 2, **caractérisé en ce que** la porosité ouverte du substrat poreux est comprise entre 20 et 60 %, de préférence entre 40 et 50 %, par rapport au volume total du substrat poreux.

4. Catalyseur selon une des revendications 1 à 3, **caractérisé en ce que** le catalyseur présente un rapport entre surface et volume de 0,5 à 10 mm⁻¹, en particulier de 1 à 5 mm⁻¹.

5. Catalyseur selon une des revendications 1 à 4, **caractérisé en ce que** la couche en matériau contenant du cobalt oxydique est composé d'oxyde de cobalt ou d'oxydes mixtes contenant du cobalt, de préférence au moins un composé contenant du cobalt oxydique présentant une structure de pérovskite ou de spinelle, ou dans lequel la couche en matériau contenant du cobalt oxydique contient des composés de cobalt dans lesquels au moins 30 %, de préférence plus de 50 % des atomes de Co sont présents dans un état chimiquement trivalent.

6. Catalyseur selon une des revendications 1 à 5, **caractérisé en ce que** sa densité en vrac est de 0,5 à 2 g/cm³, de préférence de 0,75 à 1,5 g/cm³.

7. Catalyseur selon une des revendications 1 à 6, **caractérisé en ce que** sa teneur en substrat poreux est d'au moins 85 % en poids, que sa teneur en couche fonctionnelle d'oxyde de cérium est comprise entre 2 et 14 % en poids et que sa teneur en couche de matériau contenant du cobalt oxydique est comprise entre 0,1 et 5 % en poids, dans tous les cas par rapport au poids total du catalyseur.

8. Procédé de fabrication du catalyseur selon la revendication 1, comprenant les mesures suivantes :
i) fabrication d'un substrat poreux en matériau polycristallin ou vitreux anorganique composé d'oxyde de magnésium ou d'oxyde mixte céramique composé à au moins 50 % en masse d'oxyde de magnésium par frittage d'un corps cru d'une manière connue en soi,
ii) imprégnation simple ou multiple du substrat poreux obtenu à l'étape i) avec une solution qui contient un sel de cérium dissous,
iii) séchage et/ou calcination du substrat imprégné obtenu à l'étape ii) pour réaliser une couche fonctionnelle d'oxyde de cérium ou un précurseur de la couche fonctionnelle d'oxyde de cérium,
iv) imprégnation simple ou multiple du substrat revêtu obtenu à l'étape iii) avec une solution qui contient un sel de cobalt dissous, et
v) séchage et/ou calcination du substrat imprégné obtenu à l'étape iv) pour réaliser une couche fonctionnelle contenant du cobalt oxydique ou un précurseur d'une couche fonctionnelle contenant du cobalt oxydique.

9. Procédé selon la revendication 8, **caractérisé en ce qu'**à l'étape i), on utilise de l'oxyde de magnésium ou un mélange d'oxyde de magnésium avec d'autres oxydes anorganiques ou de préférence un précurseur de l'oxyde de magnésium ou de ces autres oxydes anorganiques, du carbonate de magnésium étant utilisé de manière particulièrement préférentielle comme précurseur de l'oxyde de magnésium.

10. Procédé selon une des revendications 8 à 9, **caractérisé en ce que** le frittage du corps cru à l'étape i) est effectué à des températures comprises entre 1000 et 1300 °C.

11. Procédé selon une des revendications 8 à 10, **caractérisé en ce qu'**à l'étape ii), on utilise du nitrate de cérium comme sel de cérium.

12. Procédé selon une des revendications 8 à 11, **caractérisé en ce qu'**à l'étape iv), on utilise du nitrate de cobalt ou de l'acétate de cobalt comme sel de cobalt.

13. Utilisation du catalyseur selon une des revendications 1 à 7 pour la décomposition du protoxyde d'azote contenu dans des gaz, en particulier dans les gaz d'échappement ou les gaz de processus, de manière particulièrement préférentielle dans les installations de production industrielle, dans les stations d'épuration, dans les usines d'incinération d'ordures, dans les turbines à gaz ou dans les véhicules automobiles.

14. Utilisation selon la revendication 13, caractérisée en que l'installation de production industrielle est une installation de production de caprolactame, une installation de production d'acide nitrique ou une installation de production d'acides carboniques multivalents par oxydation avec de l'acide nitrique.

15. Utilisation selon la revendication 14, caractérisée en que les catalyseurs sont utilisés comme catalyseurs secondaires dans des installations d'acide nitrique ou dans des installations de caprolactame à des températures de 800 à 1000 °C, de préférence de 850 à 950 °C.

16. Utilisation selon la revendication 14, caractérisée en que les catalyseurs sont utilisés comme catalyseurs tertiaires dans des installations d'acide nitrique ou dans des installations de caprolactame à des températures de 300 à 700 °C, de préférence de 400 à 700 °C, en particulier de 450 à 650 °C.
